# EUROPEAN PATENT SPECIFICATION

(11) **EP 3 041 167 B1**
(45) Date of publication and mention of the grant of the patent: **19.08.2020**
(21) Application number: 15202646.4
(22) Date of filing: 23.12.2015
(51) Int. Cl.: H04L 12/12

(54) **WAKE-ON-LINK**
WAKE-ON-LINK
WAKE-ON-LINK

(30) Priority: 02.01.2015 US 201514588794
(43) Date of publication of application: 06.07.2016
(73) Proprietor: Cisco Technology, Inc., San Jose, CA 95134-1706 (US)
(72) Inventor: SHVARZBERG, Leonid, Santa Rosa, CA 95403 (US); JONES, Peter, Campbell, CA 95008 (US); DESINIOTIS, Chris, Fremont, CA 94539 (US); VAVILALA, Krishna Kumar, K 560067 Bangalore (IN)
(74) Representative: Clark, Jane Anne

(56) References cited:
- WO-A1-2011/093901
- US-A1- 2012 161 546
- US-B1- 8 345 673

## Description

### Technical Field.

This application relates to network apparatus and, in particular, to a network connectivity device, such as a network switch.

### Background

High speed data networks form part of the backbone of what has become indispensable worldwide data connectivity. Within the data networks, network apparatus and/or devices such as switching devices direct data packets from source ports to destination ports, helping to, eventually, guide the data packets from a source communication device to a destination communication device. In this application, energy consumption of network devices is of interest, particularly reduced energy consumption.

WO2011/093901 describes a switch connected to a network that is configured to have one or more components that can be placed in a deep sleep mode. The switch includes a management circuit that is configured to wake up the components in deep sleep mode. The management circuit includes a port that receives packets and a wake-up circuit that determines whether a packet received via the port is a magic packet including a unique ID for the port or the switch.

US8345673 describes an apparatus having a physical-layer input circuit to receive first signals representing first data, a first serializer to transmit a serial stream of the first data, and a magic packet circuit to generate a magic packet signal when the first data includes a magic packet.

### SUMMARY

The invention is defined by the appended claims.

A method may be provided that involves monitoring, at a network switch that is in stand-by mode, a loss of signal terminal of the network switch. The method may further involve identifying an inactive state of the loss of signal terminal, and in response, initiating, a wake-up procedure to put the network switch in an active mode.

A device may be provided that includes a communication interface circuitry configured to send and receive data to and from an upstream network device. The device may further include a terminal that may indicate a state of communication with the upstream network device, wherein a first state of the terminal is indicative of a loss of signal from the upstream network device, and a second state of the terminal is indicative of a signal being received from the upstream network device. The device may also include a power management processor that may monitor the terminal, and put the communication interface in sleep mode or active mode in response to a change of the state of the terminal.

A computer readable medium may also be provided that contains instructions executable by a processor. The instructions may include instructions to configure a network switch in a sleep state, wherein, in the sleep state, a central processing unit (CPU) and a communication interface of the network switch are non-operational. The instructions may further include instructions to detect an absence of signal over a communication link between the network switch and an upstream network device. The medium may also include instructions to configure the network switch in active state in response to identification of resumption of signal over the communication link, wherein, in the active state, the CPU and the communication interface of the network switch are operational.

### BRIEF DESCRIPTION OF THE DRAWINGS

The embodiments may be better understood with reference to the following drawings and description. The components in the figures are not necessarily to scale. Moreover, in the figures, like-referenced numerals designate corresponding parts throughout the different views.
Figure 1 illustrates an example connectivity device;
Figure 2 illustrates an example of circuitry within an example switch;
Figure 3 illustrates an example upstream device in an example network;
Figure 4 illustrates an example power management operation of a connectivity device;
Figure 5 illustrates an example power management operation of a connectivity device.

### DETAILED DESCRIPTION

Communication of data over a network, such as a local area network (LAN), or a wide area network (WAN), may involve a source communication device transmitting data to a destination communication device. The source and/or destination communication device may be a desktop computer, a laptop computer, a tablet computer, a smart phone, a cellular phone, a server computer, a fax machine, a printer, a digital camera, a personal digital assistant (PDA), a conference client, or any other communication enabled device. The source communication device and the destination communication device may be referred to as the source device and the destination device respectively.

While the source and destination device may be responsible for transmission and receipt of data respectively, the network may involve one or more connectivity devices, or network devices, responsible for relaying the data from the source to the destination device. For example, a connectivity device may be a router, a switch, and/or a hub, among several others. The source and/or destination devices may communicate data in the form of one or more communication packets. The data may include audio data, video data, file transfer data, e-commerce data, web-page or website data, instant messages, emails, and/or any other data communicated between a source and a destination device. The communication packet may use a format, or a protocol such as user datagram protocol (UDP), transmission control protocol (TCP), internet control message protocol (ICMP), or any other protocol. The technical solutions described throughout this disclosure may be applicable to any of the connectivity devices involved in communication of data over a network; however, for purpose of explanation of the technical features, a network switch is used as an example connectivity device.

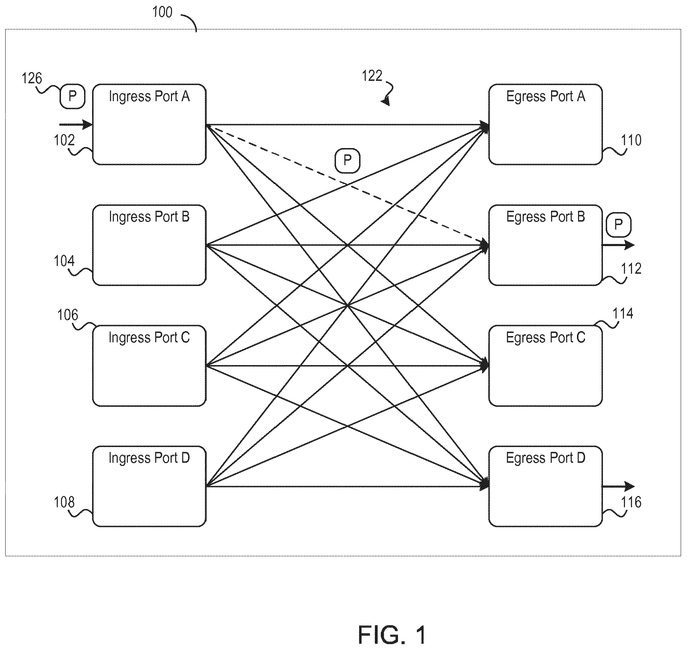

Figure 1 illustrates an example network switch 100. The network switch 100 enables connecting communication devices together on a network by performing packet switching. The network switch 100 may also be referred to as a 'switch' 100. The switch 100 may include one or more ports. A port at which a data packet is received may be referred to as an input port or an ingress port. A port from which a data packet is output towards a destination may be referred to as an output port, or an egress port. The switch 100 switches packets from an input port to an output port. The switch 100 may include circuitry, such as the ports, Physical interface devices (PHYs), and switching fabric devices, which may include ASICS and/or FPGAs. Figure 1 illustrates the example switch 100 with the input ports 102, 104, 106, and 108, and the output ports 110, 112, 114, and 116. The input and output ports may be medium dependent interface (MDI) ports and/or medium dependent interface crossover (MDIX) ports. A switch fabric 122 may provide connections between the input ports 102 - 108 and the output ports 110 - 116. As shown in Figure 1, a packet 126 may arrive at the input port 102. The switch 100 may determine the egress port 112 as a destination output port for the communication packet 126 based on a destination address associated with the communication packet 126. Under control of the switch 100, the packet 126 may flow through the switching fabric 122 and to the output port 112. The output port 112 may send the packet to towards the destination address associated with the communication packet 126.

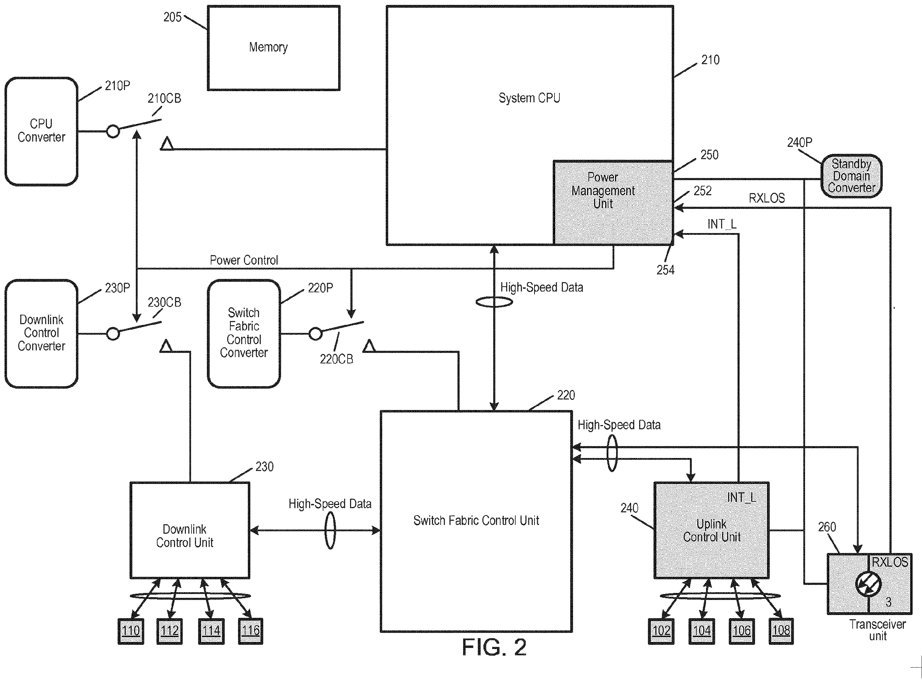

Figure 2 illustrates an example of circuitry within the switch 100. The switch 100 may include components such as a central processing unit (CPU) 210, a switch fabric control unit 220, a downlink control unit 230, an uplink control unit 240, a transceiver unit 260, and a memory storage device 205. The switch 100 may include one or more power sources that provide electric power for operation of the components. In an example, the components may operate at different power levels. For example, the components may operate at different voltages and/or different currents. Accordingly, the switch 100 may include one or more power converters 210P-240P associated with the components. For example, a power converter 210P may provide power to the CPU 210; a power converter 220P may provide power to the switch fabric control unit; a power converter 230P may provide power to the downlink control unit 230; and a power converter 240P may provide power to the uplink control unit 240. The converter 240P may also provide power to a power management unit 250 and a transceiver unit 260.

In another example, the switch 100 may include a power interrupt, such as circuit breakers 210CB-230CB. In other examples, transistors or any other form of switching device may be used. A power interrupt (hereinafter described as a circuit breaker) may enable and disable power of the respective component. For example, the CPU 210 may be associated with the circuit breaker 210CB; the switch fabric control unit 220 may be associated with the circuit breaker 220CB; and the downlink control unit 230 may be associated with the circuit breaker 230CB.

In an example, the switch 100 may include a power management unit 250. The power management unit 250 may control the circuit breakers 210CB-230CB. The power management unit 250 may consequently control power consumption of the components of the switch 100 connected to the respective circuit breakers 210CB-230CB. The power management unit 250 may be part of the CPU 210 circuitry or circuitry independent of the CPU 210.

The CPU 210 may be a processor. The CPU 210 may be responsible for execution of an operating system and/or control instructions. The CPU 210 may be one or more devices operable to execute logic. The logic may include computer executable instructions or computer code embodied in the memory 205 or in other memory that when executed by the CPU 210, cause the CPU 210 to perform the features implemented by the logic. The computer code may include instructions executable with the CPU 210. The computer code may be written in any computer language now known or later discovered, such as C++, C#, Java, Pascal, Visual Basic, Perl, HyperText Markup Language (HTML), JavaScript, assembly language, shell script, or any combination thereof. The computer code may include source code and/or compiled code. Examples of the CPU 210 may include a general processor, a central processing unit, an application specific integrated circuit (ASIC), a digital signal processor, a field programmable gate array (FPGA), a digital circuit, an analog circuit, or any combinations thereof. The CPU 210 may be in communication with the memory 205. The CPU 210 may be in communication with the other components of the switch 100.

The CPU 210 may receive power via the circuit breaker 210CB. The circuit breaker 210CB may enable transmission of power from the power converter 210P associated with the CPU 210 to the CPU 210. The power converter 210P may be a DC/DC electric power converter. The power converter 210P may convert power from a first voltage level to a second voltage level. For example, the first voltage level may be a voltage level of a power source input to the power converter 210P and the second voltage level may be an operative voltage level of the CPU 210 that is output by the power converter 210P. Alternatively or in addition, the circuit breaker 210CB may enable transmission of power from the power source to the CPU 210 without the power converter 210P in between. Examples of the power source may include a battery, a AC/DC power converter connected to an electric outlet, a universal serial bus (USB) port, and any other source of electric power.

The memory 205 may be non-transitory computer storage medium. Examples of the memory 205 may include random access memory, such as dynamic random access memory (DRAM), static random access memory (SRAM), Flash memory, read only memory (ROM) or any other type of memory or a combination thereof. The memory 205 may store control instructions executable by the CPU 210. The memory 205 may also contain data used during the operation of the switch 100 such as buffered packet data, threshold values, network policy parameters, and/or any other data that influences the operation of the switch 100.

The uplink control unit 240 may be circuitry responsible for receiving incoming data at the switch 100 from a source device, such as the data packet 126. The uplink control unit 240 may be circuitry that implements functions at the physical layer (PHY) of a networking model such as the Open Systems Interconnection (OSI) model. The uplink control unit 240 may connect the switch fabric with the physical medium, such as an optical fiber or a copper cable, over which the switch 100 communicates data. The uplink control unit 240 may control the input ports 102-108 to which the physical medium may be connected. For example, the input ports may connect to the physical medium via connecters such as RJ45, RJ48, RJ61, or any other connecter type.

In an example, the uplink control unit 240 may implement the PHY functions according to industry standards such as the 1000BASE-T, 100BASE-TX, and/or 10BASE-T Ethernet standards. Alternatively or in addition, the uplink control unit 240 may receive the data packet 126 as an Ethernet frame and forward the received frame to the CPU 210 and/or the switch fabric control unit 220. The uplink control unit 240 may include Serializer/Deserializer (SerDes) for serialization-deserialization of the incoming data packet 126. The uplink control unit 240 may be referred to as communication interface circuitry. Alternatively or in addition, communication interface circuitry may refer to the uplink control unit 240 and the downlink control unit 230 together.

Alternatively or in addition, the uplink control unit 240 may include hardware such as one or more registers, a memory, and/or a processor. The uplink control unit 240 may include control instructions. The control instructions associated with the uplink control unit 240 may be stored in the memory 205 and/or in a separate memory, such as a memory in the uplink control unit 240. The control instructions associated with the uplink control unit 240 may be executed by the CPU 210 and/or by a separate processor, such as the processor in the uplink control unit 240. Alternatively or in addition, the uplink control unit 240 may be an ASIC, a FPGA, and/or any other combination of circuitry.

The uplink control unit 240 may receive power via the power converter 240P. The power converter 240P may be a DC/DC electric power converter. The power converter 240P may convert power from a first voltage level to a second voltage level. For example, the first voltage level may be a voltage level of a power source input to the power converter 240P and the second voltage level may be an operative voltage level of the uplink control unit 240 that is output by the power converter 240P. Alternatively or in addition, the uplink control unit 240 may receive power directly from the power source without the power converter 240P in between. Examples of the power source may include a battery, an AC/DC power converter connected to an electric outlet, a universal serial bus (USB) port, and any other source of electric power.

The downlink control unit 230 may be circuitry responsible for transmitting outgoing data from the switch 100 to corresponding destination device. The downlink control unit 230 may be circuitry that implements functions at the PHY of a networking model such as the Open Systems Interconnection (OSI) model. The downlink control unit 230 may connect the switch fabric with the physical medium, such as an optical fiber or a copper cable, over which the switch 100 communicates data. The downlink control unit 230 may control the output ports 110-116 to which the physical medium may be connected. For example, the output ports may connect to the physical medium via connecters such as RJ45, RJ48, RJ61, or any other connecter type.

In an example, the downlink control unit 230 may implement the PHY functions according to industry standards such as the 1000BASE-T, 100BASE-TX, and/or 10BASE-T Ethernet standards. Alternatively or in addition, the downlink control unit 230 may transmit the data packet 126, received from the CPU 210 and/or the switch fabric control unit 220, as an Ethernet frame to the corresponding destination device. The downlink control unit 230 may include Serializer/Deserializer (SerDes) for serialization-deserialization of the outgoing data packet 126. The downlink control unit 230 may be referred to as communication interface circuitry. Alternatively or in addition, communication interface circuitry may refer to the uplink control unit 240 and the downlink control unit 230 together. Thus, the communication interface circuitry may enable receipt and transmission of data by the switch 100.

Alternatively or in addition, the downlink control unit 230 may include hardware such as one or more registers, a memory, and/or a processor. The downlink control unit 230 may include control instructions. The control instructions associated with the downlink control unit 230 may be stored in the memory 205 and/or in a separate memory, such as a memory in the downlink control unit 230. The control instructions associated with the downlink control unit 230 may be executed by the CPU 210 and/or by a separate processor, such as the processor in the downlink control unit 230. Alternatively or in addition, the downlink control unit 230 may be an ASIC, an FPGA, and/or any other combination of circuitry.

The downlink control unit 230 may receive power via the circuit breaker 230CB. The circuit breaker 230CB may enable transmission of power from the power converter 230P associated with the downlink control unit 230. The power converter 230P may be a DC/DC electric power converter. The power converter 230P may convert power from a first voltage level to a second voltage level. For example, the first voltage level may be a voltage level of a power source input to the power converter 230P and the second voltage level may be an operative voltage level of the downlink control unit 230 that is output by the power converter 230P. Alternatively or in addition, the circuit breaker 230CB may enable transmission of power from the power source to the downlink control unit 230 without the power converter 230P in between. Examples of the power source may include a battery, a AC/DC power converter connected to an electric outlet, a universal serial bus (USB) port, and any other source of electric power.

The switch fabric control unit 220 may be circuitry responsible for implementing the switching fabric 122. The switch fabric control unit 220 may be an ASIC, a FPGA, a processor, or any other circuitry or a combination thereof. The switch fabric control unit 220 may include and execute control instructions. The switch ASIC may be responsible for determining the output port 112 as the destination output port for the packet 126 based on the destination address associated with the packet 126. For example, the switch fabric control unit may determine the output port based on a layer-2 (of the OSI model) frame destination MAC address associated with the packet 126.

For example, as shown in Figure 1, the packet 126 may arrive at the input port 102. The switch fabric control unit 220 may analyze the destination address associated with the packet, such as the layer-2 MAC address of the destination (or next-hop) device. Based on the analysis, the switch fabric control unit 220 may identify the output port 112 as the output port for transmission of the packet 126. The switch fabric control unit 220 may, accordingly, forward the packet 126 via the switching fabric 122 from the uplink control unit 240 to the downlink control unit 230. The output port 112 may eventually transmit the packet 126 to the destination.

The switch fabric control unit 220 may forward the entire packet 126 from the uplink control unit 240 to the downlink control unit 230. Alternatively or in addition, the switch fabric control unit 220 may forward the packet 126 from the uplink control unit 240 to the downlink control unit 230 in parts. In an example, the switch fabric control unit 220 may buffer the packet 126 prior to forwarding the packet 126 from the uplink control unit 240 to the downlink control unit 230. The switch fabric control unit 220 may process the packet 126 based on a priority level associated with the packet 126.

The switch fabric control unit 220 may receive power via the circuit breaker 220CB. The circuit breaker 220CB may enable transmission of power from the power converter 220P associated with the switch fabric control unit 220. The power converter 220P may be a DC/DC electric power converter. The power converter 220P may convert power from a first voltage level to a second voltage level. For example, the first voltage level may be a voltage level of a power source input to the power converter 220P and the second voltage level may be an operative voltage level of the switch fabric control unit 220 that is output by the power converter 220P. Alternatively or in addition, the circuit breaker 220CB may enable transmission of power from the power source to the switch fabric control unit 220 without the power converter 220P in between. Examples of the power source may include a battery, a AC/DC power converter connected to an electric outlet, a universal serial bus (USB) port, and any other source of electric power.

The transceiver unit 260 may interface circuitry of the switch 100 (such as a mother board, or other components) to a communication link between the switch 100 and an upstream device. For example, the transceiver unit 260 may interface with a fiber optic or copper networking cable. The transceiver unit 260, for example, may be a small form-factor pluggable (SFP) or Mini-gigabit interface converter (GBIC) transceiver. The transceiver unit 260 may support SONET, Gigabit Ethernet, Fibre Channel, and other communications standards. For example, the transceiver unit 260 may be an input/output (I/O) apparatus that plugs into a port associated with the uplink control unit 240, linking the port with the communication link, such as the fiber optic or copper cable. The transceiver unit 260 may convert the network data into serial electrical data and vice versa.

The transceiver unit 260 may detect a signal level in the communication link. For example, in case of a fiber optic link, the transceiver unit may detect an optical signal level below a predetermined level. The predetermined level may be specified in a standard, such as IEEE 802.3ae 10GBASE-SR. In response to detection of a fall in the signal level, the transceiver unit may generate and output a loss of signal (Rx_LOS) indication, such as at an output terminal. The transceiver 260 may have a Rx_LOS output terminal, such as an open drain/collector output. The Rx_LOS output terminal of the transceiver 260 may be connected to a terminal of the power management unit 250. The Rx_LOS signal may be a preliminary indication to the switch 100 of which the transceiver 260 is part of that the received signal strength is below the specified threshold or range. Such an indication may point to non-installed cables, broken cables, or a disabled, failing or a powered off transmitter at the far end of the cable i.e. communication link.

The power management unit 250 controls the power supplied to the components of the switch 100. The power management unit 250 may include hardware such as one or more registers, a memory, and/or a processor. The power management unit 250 may include control instructions. The control instructions associated with the power management unit 250 may be stored in the memory 205 and/or in a separate memory, such as a memory in the power management unit 250. Alternatively or in addition, the power management unit 250 may be an ASIC, a FPGA, and/or any other combination of circuitry. In an example, the power management unit 250 may be part of the CPU 210. Alternatively or in addition, the power management unit 250 may be circuitry independent of the CPU 210.

The power management unit 250 may receive power via the power converter 240P. Alternatively or in addition, the power management unit 250 may receive power directly from the power source without the power converter 240P in between.

The power management unit 250 may control the power consumption of the switch 100 by enabling and/or disabling power supplied to the components of the switch 100. The power management features may save the power consumed by switch 100 by placing the switch in a deep sleep mode, a stand-by mode, or a power down mode or state. For example, in the deep sleep mode the power consumed by the switch 100 may not exceed 6 W (95% less than in active or awake or power up state). To achieve the power savings, the power management unit 250 may power down, or power OFF the switch fabric control unit 220, the CPU 210, and/or the uplink control unit 240. Therefore, the switch 100 may not receive and/or process any message that arrives at the uplink ports 102-108. Thus, waking up the switch 100 using a technique that involves a message, such as the wake-on-LAN technique that transmits a 'magic' packet may not work.

The switch 100 may wake-up, or resume operation from the deep sleep mode based on a real time clock, such as at a pre-specified time, or after a predetermined duration. Alternatively or in addition, the switch 100 may have an interface, such as a button, which may enable the switch to be woken-up. In another example, in the deep sleep mode, the power management unit 250 monitors sources that trigger a wake-up process. For example, the switch 100 may receive a wake command from an upstream device, or an uplink link partner that may initiate the wake-up process.

The power management unit 250 may have a terminal 252. In an example, the power management unit 250 may have a second terminal 254. In another example, the power management unit 250 may have other terminals (not shown). The terminals may be input and/or output signals. The terminals may be general purpose input/output (GPIO) terminals that are programmed to input and/or output a signal. A terminal may be also referred to as a 'pin' and/or a 'bit'. The terminals 252 and/or 254 may indicate a status of a link between an upstream device and the switch 100. Alternatively or in addition, the terminals 252 and/or 254 may indicate a status of the upstream device. The terminal 252 may be connected to the Rx_LOS terminal of the transceiver 260 to identify a status of the signal from the upstream device.

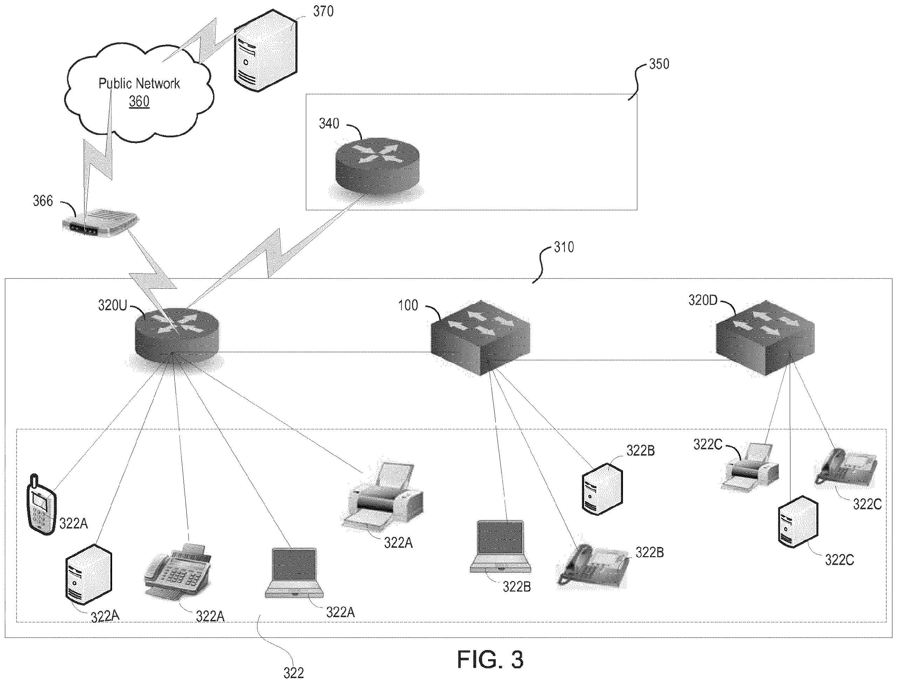

Figure 3 illustrates an example upstream connectivity device in an example network 310. The upstream connectivity device may be a network device such as a switch, a router, or any other connectivity device. The example network 310 may be a private network, such as a local area network (LAN). The LAN 310 may include the switch 100, as illustrated. The LAN may include other connectivity devices 320U and 320D and multiple communication devices 322. The communication devices 322 may include communication devices 322A, communication devices 322B, and communication devices 322C. The connectivity device 320U may interconnect to communication devices 322A in the LAN 310. The switch 100 may interconnect the communication devices 322B to the LAN 310. The connectivity device 320D may interconnect to communication devices 322C in the LAN 310. The communication devices 322A, 322B may be within an area such as a home, a school, a computer laboratory, or an office building, using wired and/or wireless network connections. The network connections, for example may use cables such as fiber-optic, copper, and/or a combination of cables. Alternatively or in addition, the LAN 310 may enable wireless communication. The communication devices 322 may include a desktop computer, a laptop computer, a tablet computer, a smart phone, a cellular phone, a server computer, a fax machine, a printer, a digital camera, a personal digital assistant (PDA), a conference client, or any other communication enabled device.

The connectivity device 320U may be upstream from the switch 100 and the connectivity device 320D may be downstream from the switch 100. A device is upstream from the switch 100 if the device forwards and/or routes data packets to the switch 100. A device is downstream from the switch 100 if the switch forwards data packets to the devices. For example, the upstream connectivity device 320U and the downstream connectivity device 320D may, respectively, be a switch, a router, a combination router/switch, and/or any other type of connectivity device, or network device, enabled to communicate with the switch 100. Therefore, as illustrated in figure 3, and with respect to the switch 100, the connectivity device 320D is 'downstream', and the connectivity device 320U that enables connectivity of the switch 100 with the internet, or another LAN, is 'upstream.'

For example, the communication devices 322B, which connect to the switch 100, may communicate with other communication devices within the LAN 310. Alternatively or in addition, the communication devices 322B may communicate with communication devices that are external to the LAN 310, such as those in another LAN 350 or in a public network 360, such as the internet. The connectivity device 320U may include functionality of a router to enable communication with the external networks 350 and/or 360. Alternatively or in addition, the LAN 310 may include a router (not shown) that is separate from the connectivity device 320U. In an example, the connectivity device 320U may communicate with the public network 360 via a modem 366. The communication devices 322B may communicate with the external networks via the switch 100 and further with the upstream connectivity device 320U.

In case of the connectivity device 320D, the switch 100 and the connectivity device 320U are upstream devices that enable the communication devices 322C, which connect to the connectivity device 320D, to communicate with communication devices that are external to the LAN 310. Thus, as illustrated in figure 3, the connectivity device 320D is downstream from the switch 100, and the connectivity device 320U; or in other words, the switch 100 and the connectivity device 320U are upstream from the connectivity device 320D. Figure 3 illustrates one possible arrangement of connectivity devices and communication devices; other arrangements are possible.

The switch 100, the connectivity device 320U, and the connectivity device 320D may communicate with each other via a communication link, such as a fiber optic connection, a copper connection, or a wireless connection. A downstream device may monitor a status of the link between itself and an upstream device. For example, the switch 100 may monitor a status of the link between the switch 100 and the connectivity device 320U. For example, the terminal 254 may be a loss of signal terminal (RxLOS) that indicates a loss of signal from the connectivity device 320U. An active state of the RxLOS terminal may indicate an absence of signal from the connectivity device 320U. For example, if the connectivity device 320U is in communication with the switch 100 over a fiber optic link, an active RxLOS may indicate that an optical transmitter of the connectivity device 320U that is connected to the switch 100 is not functional, and/or is switched off. Alternatively or in addition, an inactive RxLOS may indicate a functional optical transmitter of the connectivity device 320U. For example, if the optical transmitter of the connectivity device 320U connected to the switch 100 is ON (transmitting data) the RxLOS may be inactive.

Alternatively or in addition, the terminal 254 may be an interrupt terminal (INT_L) that indicates a change in status of the link between the switch 100 and the connectivity device 320U. For example, in response to a change in the RxLOS terminal from inactive to active state, the power management unit 250 may assert a signal on the INTL_L terminal. Alternatively or in addition, the power management unit 250 may assert an interrupt signal on the INT_L terminal in response to the RxLOS transitioning from active state to inactive state.

In another example, the connectivity device 320U may communicate with the switch 100 over a copper link. In this case, the switch 100 may detect a change in link status. For example, the switch 100 may detect that the connectivity device 320U dropped the copper link, for example by disabling the port at which the copper link is connected. For example, the connectivity device 320U may stop transmission of active link pulses via the copper link. The switch 100 may detect the termination of the transmission to identify the dropped copper link. In case the connectivity device 320U drops the copper link, a signal on the INT_L terminal may indicate the change in the status of the copper link. The INT_L terminal may connect to a terminal of the CPU 210. Alternatively or in addition, the power management unit 250 may monitor the INT_L terminal and/or the RxLOS terminal to identify the change in status of the communication link with the connectivity device 320U. The power management unit 250, in response to signals on the terminals 252, 254 may change power supply of the one or more components of the switch 100. For example, the power management unit 250 may enable and/or disable the power supply to the components of the switch 100. For example, the power management unit 250 may control the circuit breakers 210CB-230CB to change the power supplied to the components of the switch 100.

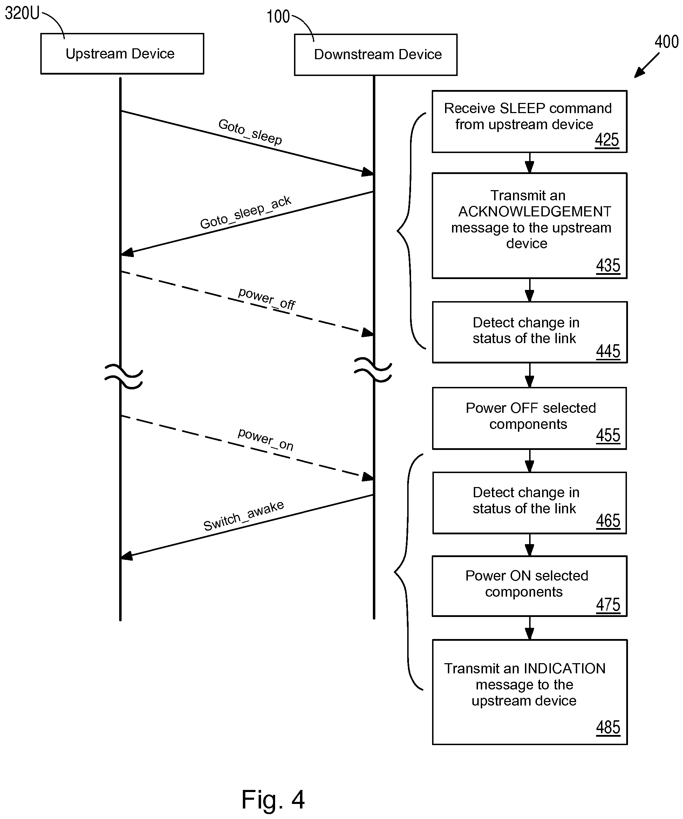

Figure 4 illustrates an example power management operation of a connectivity device, such as the switch 100. Figure 4 illustrates the connectivity device 320U as an upstream device and the switch 100 as a downstream device. Figure 4 also shows an example flowchart 400 of the steps performed by the switch 100 along with a sequence of interactions between the upstream device 320U and the switch 100. The switch 100 may perform fewer or more steps than those illustrated in Figure 4. The operations may be executed in a different order than illustrated in Figure 4. In Figure 4, a solid line indicates a packet, or a message, such as a UDP packet, or a TCP packet, or any other packet communicated between the connectivity devices; a broken line indicates disabling/enabling of a communication link between the connectivity devices by the upstream device.

The switch 100 may receive a sleep command (425) from the upstream device 320U. For example, the switch may receive the sleep command as part of a packet, such as a UDP packet, a TCP packet, or any other communication packet. The switch 100 may receive the packet via the input ports 102-108 at the uplink control unit 240. The CPU 210 may analyze and identify the received packet as the sleep command. In response, the CPU 210 may generate and transmit an acknowledgment message (435) to the upstream device 320U. The switch 100 may transmit the acknowledgement message as a UDP packet, a TCP packet, or any other communication packet via the output ports 110-116 at the downlink control unit 230. The acknowledgement message may indicate that the switch 100 has identified the sleep command.

The switch 100 may monitor status of the communication link between the switch 100 and the upstream device 320U. The switch 100 may identify that the upstream device 320U disabled data transmission to the switch 100. For example, the upstream device 320U may shut down, power OFF, or disable a component of the upstream device 320U, such as a transmitter, that is connects and transmits data to the switch 100. For example, if the upstream device 320U and the switch 100 are connected via an optical link, the upstream device 320U may disable an optical transmitter connected to the optical link between the upstream device 320U and the switch 100. Alternatively or in addition, if the upstream device 320U and the switch 100 are connected via a copper link, the upstream device 320U may drop the link to the switch 100, for example by disabling the port at which the communication link is connected.

The switch 100 may detect a change in the status of the link (445). For example, the RxLOS terminal 252 may transition to an active state in response to a loss of signal from the upstream device 320U. The RxLOS terminal 252 may be inactive while the upstream device has the transmitter connected to the switch 100 enabled Alternatively or in addition, the INT_L interrupt terminal 254 may assert an interrupt in response to the change in the status of the link. The power management unit 250 may monitor the RxLOS terminal 252 and/or the INT_L terminal 254.

The power management unit 250 may power OFF (455) selected components of the switch 100 in response to the change in state of the RxLOS terminal 252. For example, the power management unit 250 may control the circuit breakers 210CB-230CB to power OFF the components associated with the respective circuit breakers. For example, the power management unit 250 may power OFF the switching fabric control unit 220 by disabling the corresponding circuit breaker 220CB; the downlink control unit 230 by disabling the corresponding circuit breaker 230CB; and the CPU 210 by disabling the corresponding circuit breaker 210CB. The uplink control unit 240 and the power management unit 250 may continue to receive power and be operative while the other selected components may be powered OFF and thus inoperative. The switch 100 may be said to be in 'deep sleep mode' in this case. Figure 2 illustrates, by shading, the components that are powered OFF and the components that continue to be powered ON in deep sleep mode. In the deep sleep mode the switch 100 may not process any data packets received at the uplink control unit 240. For example, the switch may not process a wake-on-LAN packet, and thus, may not resume operation by a wake-on-LAN or any other message transmitted via a data packet.

Alternatively or in addition, the switch 100 may store selective data in the memory 205 when transitioning into deep sleep mode. For example, the data that was dynamically generated may not be stored into memory 205. Alternatively or in addition, the memory 205 may be setup with data that the switch 100 may require upon waking up from the deep sleep mode. In another example, the memory 205 may continue to be powered ON during deep sleep mode. Thus, the switch 100 may not perform additional steps related to restoring data in the memory 205 during wake-up, consequently saving time during the wake-up.

Alternatively or in addition, the memory 205 in the switch 100 may include one or more separate memory devices that may store different types of data on the switch 100. For example, the switch 100 may store dynamically generated data, while the switch 100 was in operation, in a first memory device included in the memory 205. A second memory device, separate from the first, may store operating system of the switch 100. In another example, a third memory may store a startup configuration of the switch 100. The dynamically generated data may include switch operation parameters such as port buffers, port priorities, and other dynamic data. The startup configuration of the switch 100 may include a default gateway address, a timezone, a status of the neighbor discovery protocol, and other settings for the switch 100 to resume operation on startup. The power management unit 250 may maintain power of one or more of the memory to enable fast wake-up from the deep sleep mode.

For example, a default configuration of the switch fabric control unit 220, over time, may be modified. For example, the switch 100, or an administrator of the switch 100 may identify and record steps to be taken in response to particular events. For example, in response to a packet for a particular destination communication device, the switch fabric control unit 220 may be programmed forward the received packet via a particular output port, different than a default output port. Alternatively or in addition, the configuration may be modified in response to a change in network policy associated with the LAN 310. The CPU 210 may maintain the modified configuration of the switch fabric control unit 210 in the memory 205. During powering the switch 100 back from the deep sleep mode, the CPU 210 may start from the modified configuration, rather than deriving the modified configuration from a startup configuration, such as a default configuration. Starting from the modified configuration may be more less time consuming than from the startup configuration. In addition, the memory 205 may store hardware state including parameters such as counters, statistics, program counters, memory addresses, and register values. The hardware state may be restored to the stored previous values for a fast startup.

The switch 100 may continue to stay in the deep sleep mode until it detects a change in the status of the communication link (465). The power management unit 250 may continue to monitor the status of the communication link in the deep sleep mode. The power management unit 250 may detect a resumption in transmission from the upstream device 320U. For example, the upstream device 320U may enable the optical transmitter connected to the communication link. Alternatively or in addition, the upstream device 320U may enable the port at which the communication link is connected. For example, the RxLOS terminal 252 may transition to an inactive state in response to resumption in transmission from the upstream device 320U. Alternatively or in addition, the INT_L interrupt terminal 254 may assert an interrupt upon the resumption.

The switch 100 may initiate a wake up process (475) in response to the change in the status of the RxLOS terminal 252 and/or the interrupt on INT_L interrupt terminal 254. The wake up process may include powering ON the components that the power management unit 250 powered OFF for the deep sleep mode. The power management unit 250 may power ON a component of the switch 100 by enabling the corresponding circuit breaker.

Alternatively or in addition, data in the memory 205 may be restored so that the switch 100 may resume operation. For example, any data that was dynamically generated prior to the switch 100 transitioning into the deep sleep mode may be deleted. For example, a hardware/ASIC state, such as the switch fabric control unit 220, may be restored to the state before the switch 100 went into deep sleep mode. The hardware state may be stored in the memory 205. The CPU 210 may copy contents of the memory 205 directly to the hardware. For example, counters, statistics, program counters, memory addresses, and/or register values may be restored from the memory 205. The contents may be restored sequentially from the memory 205. Alternately or in addition, the CPU 210 may copy values from the memory 205 in bulk using, for example, Direct Memory Access (DMA), resulting in faster bootup time. The sequence of contents in the memory 205 may be in a different order than a sequence in which the contents are to be restored in the hardware. For example, in the memory 205 value of register-1 may be stored following a value of a program counter PC-1; however, during restoration, the register-1 may be restored prior to the program counter PC-1.

By restoring parameters of the hardware state such as, the hardware counters values, the switch 100 may continue operation from where it left off prior to the deep sleep mode. In an example, dynamic state information stored in the memory 205 may be identified and discarded. For example, the dynamic state information that is discarded may include MAC addresses of other devices, that may be recorded over time, Netflow flow entries, and/or other such dynamic information.

Once power management unit 250 powers ON the components of the switch 100, i.e. once the switch 100 is out of deep sleep mode, the switch 100 may generate and send a message (485) to the upstream device 320U. For example, the CPU 210 may generate a message and transmit the message to the upstream device 320U via the uplink control unit 240. The message may indicate to the upstream device 320U that the switch 100 is completely powered ON and ready for communication. The upstream device 320U may proceed with communicating data with the switch 100 upon receiving the indication.

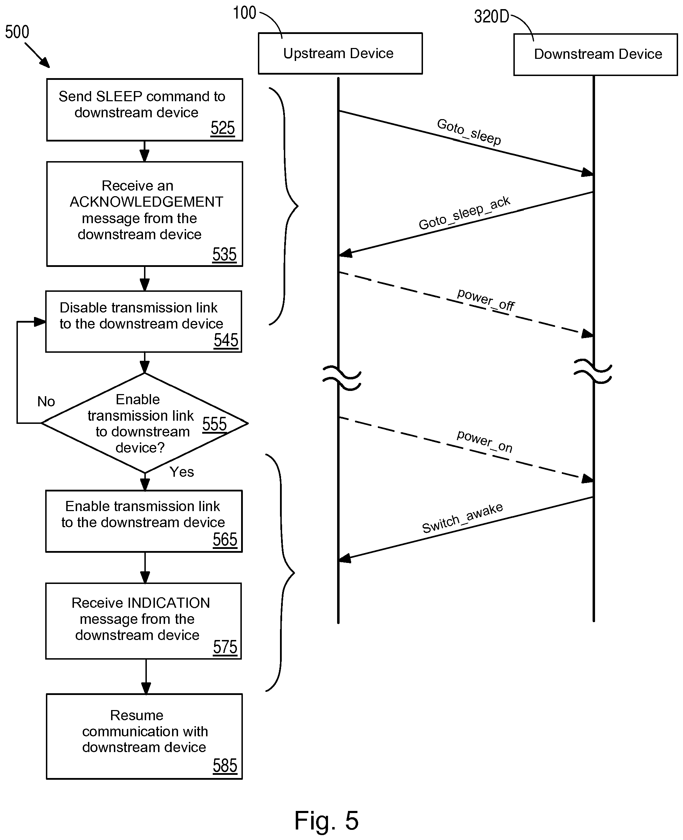

Figure 5 illustrates an example power management operation of a connectivity device, such as the switch 100. Figure 5 illustrates the switch 100 as an upstream device and the connectivity device 320D as a downstream device. Figure 5 also shows an example flowchart 500 of the steps performed by the switch 100 along with a sequence of interactions between the switch 100 and the downstream device 320D. The switch 100 may perform fewer or more steps than those illustrated in Figure 5. The operations may be executed in a different order than illustrated in Figure 5. In Figure 5, a solid line indicates a packet, or a message, such as a UDP packet, or a TCP packet, or any other packet communicated between the connectivity devices; a broken line indicates disabling/enabling of a communication link between the connectivity devices by the upstream device.

The switch 100 may send a sleep command (525) to the downstream device 320D. The switch 100 may send the sleep command as part of a packet, such as a UDP packet, a TCP packet, or any other communication packet. In response, the switch 100 may receive an acknowledgment message (535) from the downstream device 320D. The acknowledgment message may be part of a UDP packet, a TCP packet, or any other communication packet. The acknowledgement message may indicate that the downstream device 320D has identified the sleep command.

The switch 100, in response, may disable transmission (545) link to the downstream device 320D. For example, if the switch 100 and the downstream device 320D are connected via an optical link, the switch 100 may power OFF an optical transmitter connected to the optical link between the switch 100 and the downstream device 320D. For example, the switch 100 may power OFF a port connected to the downstream device 320D and/or the uplink control unit 240. Alternatively or in addition, if the switch 100 and the downstream device 320D are connected via a copper link, the switch 100 may drop the link to the downstream device 320D, for example by disabling the port at which the copper link is connected. At this point, the switch 100 may not forward packets to the downstream device 320D, which would be in deep sleep mode in response to the steps taken by the switch 100. However, the switch 100 may continue to forward packets to other communication and/or connectivity devices other than the downstream device 320D.

The switch 100 may continue to maintain the downstream device 320D in a deep sleep mode based on a network policy. For example, the switch 100 may maintain the downstream device 320D in deep sleep mode until the switch 100 receives data that is to be forwarded to the downstream device 320D. Alternatively, the switch 100 may maintain the downstream device 320D in deep sleep mode during a period indicated in a schedule. For example, the network policy for LAN 310 may be associated with or may include a schedule. The schedule may indicate a period during which the downstream device 320D is to be active and/or in deep sleep mode. For example, the downstream device 320D may be scheduled to be in deep sleep mode during night hours, holiday hours, or any other predetermined period. In an example, the downstream device 320D may connect to communication devices 322C that are in a conference room. The downstream device 320D may be scheduled to be in deep sleep mode when no meetings are scheduled using the conference room and/or the communication devices 322C. In another example, a network administrator may instruct the switch 100 to disable the communication link with the downstream device 320D.

The switch 100 may determine if the communication link with the downstream device 320D is to be enabled (555). For example, the switch 100 may determine if the downstream device 320D is to be powered ON according to the network policy or the schedule. Alternatively or in addition, the switch 100 may determine that the communication link is to be enabled in response to receipt of data that is to be communicated to the downstream device 320D. In another example, the network administrator may instruct the switch 100 to enable the communication link with the downstream device 320D.

In response to the determination that the communication link with the downstream device 320D is to be enabled, the switch 100 may enable the communication link (565) with the downstream device 320D. Otherwise, the communication link is continued to be disabled.

The switch 100 may wait for the downstream device 320D to wake up from the deep sleep mode. The switch 100 may receive a message (575) from the downstream device 320D indicative of the downstream device 320D being awake. The switch 100 may resume communication (585) with the downstream device 320D upon receipt of the indicative message. In another example, the switch 100 may resume communication with the downstream device 320D without waiting for the indicative message.

Throughout this document several technical solutions have been described to solve the technical problem of consuming lesser power during operation of a connectivity device, such as the switch 100. The power management unit 250 of the switch 100 may enable the switch 100 to consume less power, especially in the deep sleep mode. In the deep sleep mode, as described throughout this document, several components of the switch 100 may be powered OFF. The components powered OFF may include those components that handle the operations that may be part of the Layer-2 of the OSI network model. Therefore, waking the switch 100 out of the deep sleep mode using messages, such as wake-on-LAN packet is not possible. The technical solutions described use the Layer-1 of the OSI model to power ON the switch 100. Accordingly, the power management unit 250 may continue to supply power to the components of the switch that handle Layer-1 operations, such as the uplink port control unit 240 and the transceiver unit 260 during the deep sleep mode. The upstream device may enable/disable an optical transmitter or a copper link that is in connection with the switch 100 to manipulate an RxLOS terminal 252 and/or INT_L interrupt terminal 254 of the power management unit 250. The power management unit 250 may monitor the terminals 252, 254 and in response to a change in state of the terminals 252, 254, the power management unit 250 may power ON the components of the switch 100.

The description refers to one or more processors. The processors may include a general processor, a central processing unit, a microcontroller, a server, an application specific integrated circuit (ASIC), a digital signal processor, a field programmable gate array (FPGA), and/or a digital circuit, analog circuit. The processors may be one or more devices operable to execute logic. The logic may include computer executable instructions or computer code embodied in a memory that when executed by the processors, cause the processor to perform the features implemented by the logic. The computer code may include instructions executable with the processor..

The switch 100 may be implemented in many different ways. Each unit, such as the CPU 210, the switch fabric control unit 220, the downlink control unit 230, the uplink control unit 240, and the transceiver unit 260, may be hardware or a combination of hardware and software. For example, each module may include an application specific integrated circuit (ASIC), a Field Programmable Gate Array (FPGA), a circuit, a digital logic circuit, an analog circuit, a combination of discrete circuits, gates, or any other type of hardware or combination thereof. Alternatively or in addition, each unit may include memory hardware, such as a portion of the memory 205, for example, that comprises instructions executable with the processor 210 or other processor to implement one or more of the features of the unit. When any one of the unit includes the portion of the memory that comprises instructions executable with the processor, the unit may or may not include the processor. In some examples, each unit may just be the portion of the memory 205 or other physical memory that comprises instructions executable with the processor 210 or other processor to implement the features of the corresponding module without the module including any other hardware. Because each module includes at least some hardware, each unit may be interchangeably referred to as a hardware unit, such as the CPU hardware unit 210, the switch fabric control hardware unit 220, the downlink control hardware unit 230, the uplink control hardware unit 240, and the transceiver hardware unit 260.

Some features are shown stored in a computer readable storage medium (for example, as logic implemented as computer executable instructions or as data structures in memory). All or part of the system and its logic and data structures may be stored on, distributed across, or read from one or more types of computer readable storage media. Examples of the computer readable storage medium may include a hard disk, a floppy disk, a CD-ROM, a flash drive, a cache, volatile memory, non-volatile memory, RAM, flash memory, or any other type of computer readable storage medium or storage media. The computer readable storage medium may include any type of non-transitory computer readable medium, such as a CD-ROM, a volatile memory, a non-volatile memory, ROM, RAM, or any other suitable storage device. However, the computer readable storage medium is not a transitory transmission medium for propagating signals.

The processing capability of the system 100 may be distributed among multiple entities, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library (for example, a dynamic link library (DLL)). The DLL, for example, may store code that prepares intermediate mappings or implements a search on the mappings. As another example, the DLL may itself provide all or some of the functionality of the system, tool, or both.

All of the discussion, regardless of the particular implementation described, is exemplary in nature, rather than limiting. For example, although selected aspects, features, or components of the implementations are depicted as being stored in memories, all or part of the system or systems may be stored on, distributed across, or read from other computer readable storage media, for example, secondary storage devices such as hard disks, flash memory drives, floppy disks, and CD-ROMs. Moreover, the various modules and screen display functionality is but one example of such functionality and any other configurations encompassing similar functionality are possible.

The respective logic, software or instructions for implementing the processes, methods and/or techniques discussed above may be provided on computer readable storage media. The functions, acts or tasks illustrated in the figures or described herein may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the logic or instructions are stored in a remote location for transfer through a computer network or over telephone lines. In yet other embodiments, the logic or instructions are stored within a given computer, central processing unit ("CPU"), graphics processing unit ("GPU"), or system.

Furthermore, although specific components are described above, methods, systems, and articles of manufacture described herein may include additional, fewer, or different components. For example, a processor may be implemented as a microprocessor, microcontroller, application specific integrated circuit (ASIC), discrete logic, or a combination of other type of circuits or logic. Similarly, memories may be DRAM, SRAM, Flash or any other type of memory. Flags, data, databases, tables, entities, and other data structures may be separately stored and managed, may be incorporated into a single memory or database, may be distributed, or may be logically and physically organized in many different ways. The components may operate independently or be part of a same program or apparatus. The components may be resident on separate hardware, such as separate removable circuit boards, or share common hardware, such as a same memory and processor for implementing instructions from the memory. Programs may be parts of a single program, separate programs, or distributed across several memories and processors.

A second action may be said to be "in response to" a first action independent of whether the second action results directly or indirectly from the first action. The second action may occur at a substantially later time than the first action and still be in response to the first action. Similarly, the second action may be said to be in response to the first action even if intervening actions take place between the first action and the second action, and even if one or more of the intervening actions directly cause the second action to be performed. For example, a second action may be in response to a first action if the first action sets a flag and a third action later initiates the second action whenever the flag is set.

To clarify the use of and to hereby provide notice to the public, the phrases "at least one of <A>, <B>, ... and <N>" or "at least one of <A>, <B>, ... <N>, or combinations thereof or "<A>, <B>, ... and/or <N>" are defined by the Applicant in the broadest sense, superseding any other implied definitions hereinbefore or hereinafter unless expressly asserted by the Applicant to the contrary, to mean one or more elements selected from the group comprising A, B, ... and N. In other words, the phrases mean any combination of one or more of the elements A, B, ... or N including any one element alone or the one element in combination with one or more of the other elements which may also include, in combination, additional elements not listed.

Embodiments of the present disclosure provide a connectivity device, such as a switch which may consume lesser power by transitioning into stand-by mode in response to a command from an upstream connectivity device, such as another switch. In the stand-by mode the switch may power down circuitry of the switch that handles incoming messages. The switch may be powered up from the stand-by mode by using a PHY or Layer-1 components of the switch.

While various embodiments have been described, it will be apparent to those of ordinary skill in the art that many more embodiments and implementations are possible. Accordingly, the embodiments described herein are examples, not the only possible embodiments and implementations.

## Claims

1. A method comprising:
monitoring (445, 465), at a network switch that is in stand-by mode, a loss of signal terminal of the network switch;
identifying, at the network switch that is in stand-by mode, an inactive state of the loss of signal terminal; and
in response to identification of the inactive state of the loss of signal terminal, initiating (475), at the network switch, a wake-up procedure to put the network switch in an active mode;
wherein the loss of signal terminal changes state in response to a communication link between the network switch and an upstream network device being enabled or disabled.

2. The method of claim 1, wherein the loss of signal terminal of the network switch changes to the inactive state in response to receipt of a predetermined transmission from the upstream network device, optionally wherein the predetermined transmission from the upstream network device is received via a fiber optic link.

3. The method of claim 1, wherein the loss of signal terminal of the network switch changes to the inactive state in response to an interrupt generated in response to receipt of a transmission from an upstream network device via a copper link.

4. The method of any of the previous claims, further comprising:
transmitting (485), by the network switch, an acknowledgement message to the upstream network device after completion of the wake-up procedure.

5. The method of any of the previous claims, further comprising:
receiving (425), by the network switch, a message from the upstream network device, the message comprising a command for the network switch to change to the stand-by mode; and
identifying, by the network switch, an active state of the loss of signal terminal following receipt of the message from the upstream network device.

6. The method of claim 5, further comprising:
in response to identification of the active state of the loss of signal terminal following receipt of the message from the upstream network device, initiating (455), at the network switch, a stand-by procedure to put the network switch in the stand-by mode.

7. The method of claim 5 or 6, further comprising:
sending (435), by the network switch, an acknowledgment message to the upstream network device in response to the stand-by command from the upstream network device.

8. The method of any the previous claims, wherein the network switch is a first network switch, and the upstream network device is one of a second network switch, or a router.

9. A network connectivity device (100) comprising:
a communication interface circuitry (240) configured to send and receive data to and from an upstream network device (320U) via a communication link;
a loss of signal terminal (252) configured to indicate a state of communication with the upstream network device (320U), wherein a first state of the loss of signal terminal (252) is indicative of a loss of signal from the upstream network device via the communication link, and a second state of the loss of signal terminal (252) is indicative of a signal being received from the upstream network device (320U) via the communication link; and
a power management processor (250) configured to monitor the loss of signal terminal (252), and further configured to put the communication interface (240) in sleep mode or active mode in response to a change of the state of the loss of signal terminal (252).

10. The network connectivity device of claim 9, wherein the power management processor (250) is configured to put the device (100) in active mode in response to the state of the terminal (252, 254) being changed from the first state to the second state.

11. The network connectivity device of claim 10, wherein the power management processor (250) is configured to put the device (100) in sleep mode in response to the state of the terminal (252) being changed from the second state to the first state; or wherein the power management processor (250) is configured to put the device (100) in sleep mode in response to the state of the loss of signal terminal (252) being changed from the second state to the first state following receipt of a sleep command from the upstream network device (320U),
optionally wherein the device (100) being put in the sleep mode comprises the communication interface (240) being powered down.

12. The network connectivity device of any of claims 9 to 11, further comprising:
a first memory configured to be powered off in the sleep mode;
a second memory configured to receive power in the sleep mode; and
a processor configured to store device configuration in the second memory in response to the power management processor initiating the sleep mode of the device,
optionally wherein the processor is further configured to restore the device configuration from the second memory in response to the power management processor initiating the active mode of the device.

13. The network connectivity device of any of claims 9 to 12, wherein the communication interface (240) communicates with the upstream network device (320U) via a copper link, and wherein
the communication interface (240) is configured to generate an interrupt in response to a loss of signal on the copper link; and
the loss of signal terminal (252) is configured to change to the first state in response to the interrupt.

14. The network connectivity device of any of claims 9 to 13, wherein the state of the loss of signal terminal (252) is changed in response to an optical transmitter of the upstream network device (320U) being turned on or off.

15. A non-transitory computer readable storage medium comprising instructions executable by a processor, the computer readable storage medium comprising:
instructions to configure a network switch (100) in a sleep state, wherein, in the sleep state, a central processing unit, CPU, (210) and a communication interface of the network switch (100) are non-operational;
instructions to detect an absence of signal over a communication link between the network switch (100) and an upstream network device (320U); and
instructions to configure the network switch (100) in an active state and transition a loss of signal terminal of the network switch (100) to an inactive state in response to identification of resumption of signal over the communication link, wherein, in the active state, the CPU (210) and the communication interface of the network switch (100) are operational,
optionally wherein the absence of signal over the communication link between the network switch (100) and the upstream network device (320U) is in response to the upstream network device (320U) disabling communication with the network switch (100) according to a predetermined schedule.

## Patentansprüche

1. Verfahren, umfassend:
an einem Netzwerk-Switch, der in einem Stand-by-Modus ist, Überwachen (445, 465) eines Signalverlust-Endgeräts des Netzwerk-Switchs;
an dem Netzwerk-Switch, der in einem Stand-by-Modus ist, Identifizieren eines inaktiven Zustands des Signalverlust-Endgeräts und
als Reaktion auf die Identifizierung des inaktiven Zustands des Signalverlust-Endgeräts an dem Netzwerk-Switch Initiieren (475) eines Wake-up-Vorgangs, um den Netzwerk-Switch in einen aktiven Modus zu versetzen;
wobei das Signalverlust-Endgerät den Zustand als Reaktion darauf wechselt, dass eine Kommunikationsverbindung zwischen dem Netzwerk-Switch und einer vorgelagerten Netzwerkvorrichtung aktiviert oder deaktiviert ist.

2. Verfahren nach Anspruch 1, wobei das Signalverlust-Endgerät des Netzwerk-Switchs als Reaktion auf einen Empfang einer vorher bestimmten Übertragung von der vorgelagerten Netzwerkvorrichtung in den inaktiven Zustand wechselt, optional wobei die vorher bestimmte Übertragung von der vorgelagerten Netzwerkvorrichtung mittels einer Glasfaserverbindung empfangen wird.

3. Verfahren nach Anspruch 1, wobei das Signalverlust-Endgerät des Netzwerk-Switchs als Reaktion auf einen Interrupt, der als Reaktion auf eine Übertragung von einer vorgelagerten Netzwerkvorrichtung mittels einer Kupferverbindung erzeugt wird, in den inaktiven Zustand wechselt.

4. Verfahren nach einem der vorhergehenden Ansprüche, weiterhin umfassend:
Übertragen (485) einer Bestätigungsnachricht durch den Netzwerk-Switch an die vorgelagerte Netzwerkvorrichtung nach Abschluss des Wake-up-Vorgangs.

5. Verfahren nach einem der vorhergehenden Ansprüche, weiterhin umfassend:
Empfangen (425) einer Nachricht durch den Netzwerk-Switch von der vorgelagerten Netzwerkvorrichtung, wobei die Nachricht einen Befehl für den Netzwerk-Switch umfasst, in den Stand-by-Modus zu wechseln; und
Identifizieren eines aktiven Zustands des Signalverlust-Endgeräts durch den Netzwerk-Switch nach Empfang der Nachricht von der vorgelagerten Netzwerkvorrichtung.

6. Verfahren nach Anspruch 5, weiterhin umfassend:
als Reaktion auf die Identifizierung des aktiven Zustands des Signalverlust-Endgeräts nach Empfang der Nachricht von der vorgelagerten Netzwerkvorrichtung an dem Netzwerk-Switch Initiieren (455) eines Stand-by-Vorgangs, um den Netzwerk-Switch in den Stand-by-Modus zu versetzen.

7. Verfahren nach Anspruch 5 oder 6, weiterhin umfassend:
Senden (435) einer Bestätigungsnachricht durch den Netzwerk-Switch an die vorgelagerte Netzwerkvorrichtung als Reaktion auf den Stand-by-Befehl von der vorgelagerten Netzwerkvorrichtung.

8. Verfahren nach einem der vorhergehenden Ansprüche, wobei der Netzwerk-Switch ein erster Netzwerk-Switch ist und die vorgelagerte Netzwerkvorrichtung einer von einem zweiten Netzwerk-Switch oder einem Router ist.

9. Netzwerkkonnektivitätsvorrichtung (100), umfassend:
eine Kommunikationsschnittstellenschaltung (240), die dazu konfiguriert ist, Daten an und von einer vorgelagerten Netzwerkvorrichtung (320U) mittels einer Kommunikationsverbindung zu senden und zu empfangen;
ein Signalverlust-Endgerät (252), das dazu konfiguriert ist, einen Zustand einer Kommunikation mit der vorgelagerten Netzwerkvorrichtung (320U) anzugeben, wobei ein erster Zustand des Signalverlust-Endgeräts (252) einen Signalverlust von der vorgelagerten Netzwerkvorrichtung mittels der Kommunikationsverbindung angibt und ein zweiter Zustand des Signalverlust-Endgeräts (252) angibt, dass ein Signal von der vorgelagerten Netzwerkvorrichtung (320U) mittels der Kommunikationsverbindung empfangen wird; und
einen Energiemanagementprozessor (250), der dazu konfiguriert ist, das Signalverlust-Endgerät (252) zu überwachen, und weiterhin dazu konfiguriert ist, die Kommunikationsschnittstelle (240) als Reaktion auf einen Wechsel des Zustands des Signalverlust-Endgeräts (252) in einen Schlafmodus oder einen aktiven Modus zu versetzen.

10. Netzwerkkonnektivitätsvorrichtung nach Anspruch 9, wobei der Energiemanagementprozessor (250) dazu konfiguriert ist, die Vorrichtung (100) als Reaktion darauf, dass der Zustand des Endgeräts (252, 254) aus dem ersten Zustand in den zweiten Zustand gewechselt wird, in einen aktiven Modus zu versetzen.

11. Netzwerkkonnektivitätsvorrichtung nach Anspruch 10, wobei der Energiemanagementprozessor (250) dazu konfiguriert ist, die Vorrichtung (100) als Reaktion darauf, dass der Zustand des Endgeräts (252) aus dem zweiten Zustand in den ersten Zustand gewechselt wird, in einen Schlafmodus zu versetzen; oder wobei der Energiemanagementprozessor (250) dazu konfiguriert ist, die Vorrichtung (100) als Reaktion darauf, dass der Zustand des Signalverlust-Endgeräts (252) aus dem zweiten Zustand in den ersten Zustand nach Empfang eines Schlaf-Befehls von der vorgelagerten Netzwerkvorrichtung (320U) gewechselt wird, in einen Schlafmodus zu versetzen,
optional wobei das Versetzen der Vorrichtung (100) in den Schlafmodus umfasst, dass die Kommunikationsschnittstelle (240) abgeschaltet wird.

12. Netzwerkkonnektivitätsvorrichtung nach einem der Ansprüche 9 bis 11, weiterhin umfassend:
einen ersten Speicher, der dazu konfiguriert ist, in dem Schlafmodus abgeschaltet zu werden;
einen zweiten Speicher, der dazu konfiguriert ist, in dem Schlafmodus Energie zu empfangen; und
einen Prozessor, der dazu konfiguriert ist, eine Vorrichtungskonfiguration in dem zweiten Speicher als Reaktion darauf, dass der Energiemanagementprozessor den Schlafmodus der Vorrichtung initiiert, zu speichern,
optional wobei der Prozessor weiterhin dazu konfiguriert ist, die Vorrichtungskonfiguration aus dem zweiten Speicher als Reaktion darauf, dass der Energiemanagementprozessor den aktiven Modus der Vorrichtung initiiert, wiederherzustellen.

13. Netzwerkkonnektivitätsvorrichtung nach einem der Ansprüche 9 bis 12, wobei die Kommunikationsschnittstelle (240) mit der vorgelagerten Netzwerkvorrichtung (320U) mittels einer Kupferverbindung kommuniziert, und wobei
die Kommunikationsschnittstelle (240) dazu konfiguriert ist, einen Interrupt als Reaktion auf einen Signalverlust auf der Kupferverbindung zu erzeugen; und
das Signalverlust-Endgerät (252) dazu konfiguriert ist, als Reaktion auf den Interrupt in den ersten Zustand zu wechseln.

14. Netzwerkkonnektivitätsvorrichtung nach einem der Ansprüche 9 bis 13, wobei der Zustand das Signalverlust-Endgeräts (252) als Reaktion darauf, dass ein optischer Sender der vorgelagerten Netzwerkvorrichtung (320U) an- oder abgeschaltet wird, gewechselt wird.

15. Nichtflüchtiges computerlesbares Speichermedium, das Anweisungen umfasst, die durch einen Prozessor ausführbar sind, wobei das computerlesbare Speichermedium umfasst:
Anweisungen zum Konfigurieren eines Netzwerk-Switchs (100) in einem Schlafzustand, wobei ein Zentralprozessor, CPU (210), und eine Kommunikationsschnittstelle des Netzwerk-Switchs (100) in dem Schlafzustand nicht betriebsfähig sind;
Anweisungen zum Erkennen eines Fehlens eines Signals über eine Kommunikationsverbindung zwischen dem Netzwerk-Switch (100) und einer vorgelagerten Netzwerkvorrichtung (320U) und
Anweisungen zum Konfigurieren des Netzwerk-Switchs (100) in einem aktiven Zustand und Überführen eines Signalverlust-Endgeräts des Netzwerk-Switchs (100) als Reaktion auf eine Identifizierung einer Wiederaufnahme eines Signals über die Kommunikationsverbindung in einen inaktiven Zustand, wobei der CPU (210) und die Kommunikationsschnittstelle des Netzwerk-Switchs (100) in dem aktiven Zustand betriebsfähig sind,
optional wobei das Fehlen eines Signals über die Kommunikationsverbindung zwischen dem Netzwerk-Switch (100) und der vorgelagerten Netzwerkvorrichtung (320U) als Reaktion darauf ist, dass die vorgelagerte Netzwerkvorrichtung (320U) eine Kommunikation mit dem Netzwerk-Switch (100) gemäß einem vorher bestimmten Zeitplan deaktiviert.

## Revendications

1. Procédé, comprenant de :
surveiller (445, 465), au niveau d'un commutateur de réseau qui est en mode veille, un terminal de perte de signal du commutateur de réseau;
identifier, au niveau du commutateur de réseau qui est en mode veille, un état inactif du terminal de perte de signal; et
en réponse à l'identification de l'état inactif du terminal de perte de signal, initier (475), au niveau du commutateur de réseau, une procédure de réveil pour mettre le commutateur de réseau dans un mode actif;
dans lequel le terminal de perte de signal change d'état en réponse à l'activation ou à la désactivation d'une liaison de communication entre le commutateur de réseau et un dispositif de réseau en amont.

2. Procédé selon la revendication 1, dans lequel le terminal de perte de signal du commutateur de réseau passe à l'état inactif en réponse à la réception d'une transmission prédéterminée à partir du dispositif de réseau en amont, facultativement dans lequel la transmission prédéterminée à partir du dispositif de réseau en amont est reçue par l'intermédiaire d'une liaison par fibre optique.

3. Procédé selon la revendication 1, dans lequel le terminal de perte de signal du commutateur de réseau passe à l'état inactif en réponse à une interruption générée en réponse à la réception d'une transmission à partir d'un dispositif de réseau en amont par l'intermédiaire d'une liaison de cuivre.

4. Procédé selon l'une quelconque des revendications précédentes, comprenant en outre de :
transmettre (485), par le commutateur de réseau, un message d'accusé de réception au dispositif de réseau en amont après l'achèvement de la procédure de réveil.

5. Procédé selon l'une quelconque des revendications précédentes, comprenant en outre de :
recevoir (425), par le commutateur de réseau, un message à partir du dispositif de réseau en amont, le message comprenant une commande pour le commutateur de réseau pour passer au mode veille; et
identifier, par le commutateur de réseau, un état actif du terminal de perte de signal après la réception du message à partir du dispositif de réseau en amont.

6. Procédé selon la revendication 5, comprenant en outre de :
en réponse à l'identification de l'état actif du terminal de perte de signal après la réception du message à partir du dispositif de réseau en amont, initier (455), au niveau du commutateur de réseau, une procédure de veille pour mettre le commutateur de réseau dans le mode veille.

7. Procédé selon la revendication 5 ou 6, comprenant en outre de :
envoyer (435), par le commutateur de réseau, un message d'accusé de réception au dispositif de réseau en amont en réponse à la commande de veille à partir du dispositif de réseau en amont.

8. Procédé selon l'une des revendications précédentes, dans lequel le commutateur de réseau est un premier commutateur de réseau, et le dispositif de réseau en amont est l'un d'un deuxième commutateur de réseau ou d'un routeur.

9. Dispositif de connexion de réseau (100) comprenant :
un circuit d'interface de communication (240) configuré pour envoyer et recevoir des données vers et depuis un dispositif de réseau en amont (320U) par l'intermédiaire d'une liaison de communication;
un terminal de perte de signal (252) configuré pour indiquer un état de communication avec le dispositif de réseau en amont (320U), dans lequel un premier état du terminal de perte de signal (252) est indicatif d'une perte de signal à partir du dispositif de réseau en amont par l'intermédiaire de la liaison de communication, et un second état du terminal de perte de signal (252) est indicatif d'un signal reçu à partir du dispositif de réseau en amont (320U) par l'intermédiaire de la liaison de communication ; et
un processeur de gestion d'alimentation (250) configuré pour surveiller le terminal de perte de signal (252), et configuré en outre pour mettre l'interface de communication (240) en mode veille ou en mode actif en réponse à un changement de l'état du terminal de perte de signal (252).

10. Dispositif de connexion de réseau selon la revendication 9, dans lequel le processeur de gestion d'alimentation (250) est configuré pour mettre le dispositif (100) en mode actif en réponse à la modification de l'état du terminal (252, 254) à partir du premier état vers le second état.

11. Dispositif de connexion de réseau selon la revendication 10, dans lequel le processeur de gestion d'alimentation (250) est configuré pour mettre le dispositif (100) en mode veille en réponse à la modification de l'état du terminal (252) à partir du second état vers le premier état; ou dans lequel le processeur de gestion d'alimentation (250) est configuré pour mettre le dispositif (100) en mode veille en réponse à la modification de l'état du terminal de perte de signal (252) à partir du second état vers le premier état après la réception d'une commande de veille à partir du dispositif de réseau en amont (320U), facultativement dans lequel le dispositif (100) qui est mis en mode veille comprend l'interface de communication (240) qui est mise hors tension.

12. Dispositif de connexion de réseau selon l'une quelconque des revendications 9 à 11, comprenant en outre :
une première mémoire configurée pour être mise hors tension dans le mode veille;
une seconde mémoire configurée pour recevoir de l'énergie dans le mode veille; et
un processeur configuré pour stocker la configuration du dispositif dans la seconde mémoire en réponse à l'initiation du mode veille du dispositif par le processeur de gestion d'alimentation, facultativement dans lequel le processeur est en outre configuré pour restaurer la configuration du dispositif à partir de la seconde mémoire en réponse à l'initiation du mode actif du dispositif par le processeur de gestion d'alimentation.

13. Dispositif de connexion de réseau selon l'une quelconque des revendications 9 à 12, dans lequel l'interface de communication (240) communique avec le dispositif de réseau en amont (320U) par l'intermédiaire d'une liaison de cuivre, et dans lequel
l'interface de communication (240) est configurée pour générer une interruption en réponse à une perte de signal sur la liaison de cuivre; et
le terminal de perte de signal (252) est configuré pour basculer sur le premier état en réponse à l'interruption.

14. Dispositif de connexion de réseau selon l'une quelconque des revendications 9 à 13, dans lequel l'état du terminal de perte de signal (252) est modifié en réponse à l'activation ou à la désactivation d'un émetteur optique du dispositif de réseau en amont (320U).

15. Support de stockage lisible par ordinateur non transitoire comprenant des instructions exécutables par un processeur, le support de stockage lisible par ordinateur comprenant :
des instructions pour configurer un commutateur de réseau (100) dans un état de veille, dans lequel, dans l'état de veille, une unité centrale de traitement, CPU, (210) et une interface de communication du commutateur de réseau (100) ne sont pas opérationnelles;
des instructions pour détecter une absence de signal sur une liaison de communication entre le commutateur de réseau (100) et un dispositif de réseau en amont (320U); et
des instructions pour configurer le commutateur de réseau (100) dans un état actif et mettre un terminal de perte de signal du commutateur de réseau (100) sur un état inactif en réponse à l'identification de la reprise du signal sur la liaison de communication, dans lequel, dans l'état actif, la CPU (210) et l'interface de communication du commutateur de réseau (100) sont opérationnelles,
facultativement dans lequel l'absence de signal sur la liaison de communication entre le commutateur de réseau (100) et le dispositif de réseau en amont (320U) est en réponse à la désactivation par le dispositif de réseau en amont (320U) de la communication avec le commutateur de réseau (100) selon un programme prédéterminé.
